# FASCICULE DE BREVET EUROPEEN

(11) **EP 1 283 377 B1**
(45) Date de publication et mention de la délivrance du brevet: **17.08.2005**
(21) Numéro de dépôt: 02291920.3
(22) Date de dépôt: 29.07.2002
(51) Int. Cl.: F16F 13/10

(54) **Support antivibratoire hydraulique**
Hydraulisches Antischwingungslager
Hydraulic damping support

(30) Priorité: 07.08.2001 FR 0110545
(43) Date de publication de la demande: 12.02.2003
(73) Titulaire: HUTCHINSON, 75008 Paris (FR)
(72) Inventeur: Thomazeau, Mikael, 28200 Chateaudun (FR); Reh, Denis, 28200 Thiville (FR); Balazot, Gilles, 41300 Salbris (FR)
(74) Mandataire: Burbaud, Eric

(56) Documents cités:
- FR-A- 2 674 590
- GB-A- 2 341 908
- US-A- 4 773 634

## Description

La présente invention est relative aux supports antivibratoires hydrauliques, destinés par exemple au montage des moteurs de véhicules automobiles sur les caisses de ces véhicules.

Plus particulièrement, selon un premier aspect, l'invention concerne un support antivibratoire hydraulique destiné à relier entre eux des premier et deuxième éléments rigides pour amortir et filtrer des vibrations entre ces éléments, ce support comportant :
- des première et deuxième armatures rigides destinées à être fixées respectivement aux premier et deuxième éléments rigides à réunir,
- un corps en élastomère reliant entre elles les première et deuxième armatures,
- une première chambre remplie de liquide, au moins partiellement délimitée par le corps en élastomère,
- et un dispositif de découplage comprenant d'une part, des première et deuxième grilles parallèles de forme générale plane, et d'autre part, un clapet de découplage qui se présente sous la forme d'une plaquette d'élastomère et qui comprend des première et deuxième faces dotées de picots saillants en élastomère, le clapet de découplage étant monté avec jeu entre les première et deuxième grilles avec les première et deuxième faces dudit clapet de découplage disposées en regard respectivement des première et deuxième grilles et ledit clapet de découplage étant adapté pour obturer lesdites grilles, la première grille communiquant avec la première chambre et la deuxième grille communiquant avec une deuxième chambre adaptée pour permettre au clapet de découplage de vibrer librement entre les deux grilles lorsque les première et deuxième armatures subissent des mouvements vibratoires relatifs (en pratique, cette deuxième chambre sera le plus souvent constituée par une chambre de compensation remplie de liquide et reliée à la première chambre par un passage étranglé, mais il pourrait éventuellement s'agir d'une autre chambre hydraulique déformable ou encore d'une chambre pneumatique).

Le document FR-A-2 674 590 décrit un exemple d'un tel support antivibratoire, qui donne toute satisfaction au plan de son fonctionnement, notamment pour éviter ou limiter les phénomènes de claquement du clapet contre les grilles, générateurs de vibrations et/ou de bruits désagréables pour les utilisateurs du véhicule.

Toutefois, il est apparu utile de perfectionner les supports antivibratoires de ce type, notamment pour en améliorer encore les performances.

A cet effet, selon le premier aspect de l'invention, un support antivibratoire du genre en question est caractérisé en ce que les picots du clapet de découplage sont disposés pour qu'en l'absence de vibrations relatives entre les première et deuxième armatures, le clapet de découplage soit maintenu dans une position de repos où ledit clapet présente un plan moyen disposé en biais par rapport aux première et deuxième grilles.

Dans des modes de réalisation préférés du support antivibratoire selon le premier aspect de l'invention, on peut éventuellement avoir recours en outre à l'une et/ou à l'autre des dispositions suivantes :
- les picots du clapet de découplage comprennent des picots extérieurs qui sont disposés au voisinage d'une périphérie extérieure dudit clapet de découplage et qui sont répartis en des premier et deuxième groupes de picots extérieurs disposés de part et d'autre d'une ligne droite imaginaire traversant le clapet de découplage parallèlement au plan moyen dudit clapet de découplage, le premier groupe de picots extérieurs étant situé sur la première face et le deuxième groupe de picots extérieurs étant situé sur la deuxième face dudit clapet de découplage ;
- le clapet de découplage présente une forme de disque circulaire ayant un centre par lequel passe une ligne diamétrale constituant ladite ligne imaginaire ;
- les picots extérieurs du premier groupe sont symétriques des picots extérieurs du deuxième groupe par rapport à ladite ligne imaginaire ;
- le clapet de découplage comporte des premier et deuxième tétons de centrage en élastomère disposés au centre du clapet de découplage respectivement sur les deux faces dudit clapet de découplage, ces premier et deuxième tétons de centrage coopérant respectivement avec les deux grilles pour centrer le clapet de découplage par rapport auxdites grilles, les picots du clapet de découplage comprenant en outre des picots intérieurs disposés au voisinage du centre dudit clapet de découplage sur les deux faces dudit clapet de découplage ;
- le clapet de découplage comporte deux picots intérieurs disposés au voisinage du premier téton de centrage, de façon symétrique par rapport à ladite ligne imaginaire ;
- le deuxième téton de centrage est clipsé dans l'une des grilles et le clapet de découplage comporte deux picots intérieurs disposés près du deuxième téton de centrage, à l'opposé des picots extérieurs du deuxième groupe par rapport à ladite ligne imaginaire ;
- le clapet de découplage comporte en outre des bossages arrondis en élastomère qui sont répartis sur l'ensemble des première et deuxième faces dudit clapet de découplage et qui font saillie respectivement vers les première et deuxième grilles, les picots s'étendant au-delà desdits bossages arrondis à partir des première et deuxième faces du clapet de découplage ;
- le clapet de découplage comporte en outre un rebord périphérique extérieur faisant saillie vers les première et deuxième grilles à partir des première et deuxième faces du clapet de découplage, ce rebord périphérique affleurant les bossages arrondis desdites première et deuxième faces ;
- la deuxième chambre est remplie de liquide et est délimitée au moins partiellement par une paroi souple en élastomère, un passage étranglé faisant communiquer les première et deuxième chambres ;
- le corps en élastomère présente une forme de cloche s'étendant en divergeant selon un axe central entre un sommet solidaire de la première armature et une base annulaire solidaire de la deuxième armature, et le support antivibratoire comporte en outre un déflecteur en forme de couronne annulaire qui s'étend à l'intérieur de la première chambre en entourant la première grille et en convergeant vers le sommet du corps en élastomère, ledit passage étranglé débouchant dans la première chambre à l'extérieur du déflecteur ;
- les première et deuxième grilles appartiennent à une cloison rigide qui sépare les première et deuxième chambres, le déflecteur comportant un bord d'appui qui s'étend parallèlement à ladite cloison rigide et qui est serré entre la base du corps en élastomère et ladite cloison rigide ;
- le déflecteur converge vers un sommet aplati s'étendant sensiblement parallèlement aux première et deuxième grilles, ce sommet aplati présentant un rebord annulaire qui s'étend sur une certaine largeur et qui entoure une ouverture présentant elle-même un certain diamètre, la largeur du rebord étant comprise entre 2% et 5% du diamètre de l'ouverture.

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue en coupe verticale d'un support antivibratoire selon une forme de réalisation de l'invention,
- les figures 2 et 3 sont des vues en perspective des deux faces d'un clapet de découplage appartenant au support antivibratoire de la figure 1,
- la figure 4 est un graphe représentant la raideur dynamique du support antivibratoire de la figure 1 en fonction de la fréquence, comparée à la raideur dynamique du même support antivibratoire doté d'un clapet de découplage sans picots et dépourvu de déflecteur dans sa chambre de travail,
- les figures 5 et 6 sont des vues éclatées en perspective du support antivibratoire de la figure 1,
- les figures 7 et 8 sont des vues de détail en perspective de deux parties du support antivibratoire de la figure 1, comprenant l'une, un corps en élastomère résistant à la compression et l'autre, un soufflet en élastomère.

Sur les différentes figures, les mêmes références désignent des éléments identiques ou similaires.

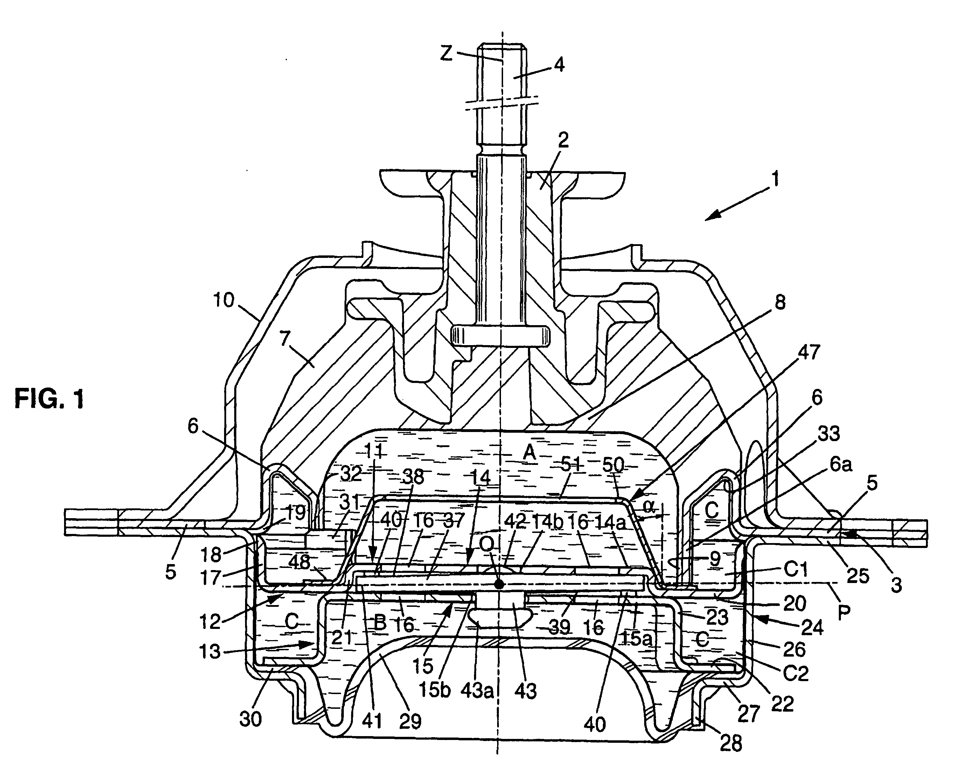

La figure 1 représente un support antivibratoire hydraulique 1 comportant des première et deuxième armatures 2,3 qui sont par exemple destinées à être fixées respectivement au bloc motopropulseur et à la caisse d'un véhicule.

Dans l'exemple considéré, la première armature 2 se présente sous la forme d'un plot métallique, réalisé par exemple en alliage léger, qui est centré sur un axe vertical Z et qui solidaire d'un goujon fileté 4 permettant par exemple la fixation du plot au bloc motopropulseur.

La deuxième armature 3, quant à elle, est formée par une couronne de tôle découpée et emboutie, également centrée sur l'axe Z. Dans l'exemple représenté, la deuxième armature 3 comporte une partie extérieure 5 qui s'étend dans un plan radial par rapport à l'axe Z et qui est destinée à être fixée par exemple à la caisse du véhicule, et une partie intérieure 6 creuse, à section sensiblement en forme de U inversé, formant une gorge annulaire 33 ouverte axialement à l'opposé de la première armature 2. La partie intérieure 6 forme en outre une jupe intérieure axiale 6a, qui s'étend vers le bas au-delà de la partie extérieure 5.

Les deux armatures 2, 3 sont reliées entre elles par un corps en élastomère 7 relativement épais, qui présente une résistance à la compression suffisante pour reprendre les efforts statiques dus au poids du bloc motopropulseur. Ce corps en élastomère 7 présente une paroi latérale en forme de cloche qui s'étend entre un sommet 8 surmoulé sur la première armature 2, et une base annulaire 9 qui est surmoulée sur la partie intérieure 6 de la deuxième armature 3.

Par ailleurs, la deuxième armature 3 est solidaire d'un capot limiteur 10 en tôle, qui présente une forme annulaire et recouvre avec jeu le corps en élastomère 7, en laissant le passage au goujon 4. Le capot 10 limite ainsi les débattements relatifs entre les première et deuxième armatures 2, 3.

La deuxième armature 3 est également solidaire d'une cloison rigide 11 qui délimite avec le corps en élastomère 5 une première chambre A remplie de liquide, dite chambre de travail.

Dans l'exemple considéré, la cloison rigide 11 est constituée de première et deuxième pièces de tôle embouties 12, 13 superposées, en forme de coupelles, qui forment respectivement dans leurs parties centrales des première et deuxième grilles plates 14, 15 qui présentent des trous 16 et qui s'étendent perpendiculairement à l'axe central Z.

La première pièce de tôle 12 comporte par exemple :
- un rebord annulaire 17 qui s'étend parallèlement à l'axe Z, ce rebord annulaire présentant un bord annulaire libre supérieur 18 en appui étanche contre une couche d'élastomère 19, laquelle couche 19 appartient au corps en élastomère 7 et est surmoulée sous la partie extérieure 5 de la deuxième armature,
- une partie annulaire 20 qui s'étend radialement vers l'intérieur à partir de l'extrémité inférieure du rebord 17, la jupe intérieure 6a de la deuxième armature étant en appui étanche contre cette partie annulaire 20,
- un ressaut 21 qui s'étend vers la chambre de travail A à partir du bord radialement intérieur de la partie annulaire 12,
- et ladite première grille 14, qui prolonge le ressaut 21 radialement vers l'intérieur.

Par ailleurs, la deuxième pièce de tôle 13 comporte, dans l'exemple considéré :
- un bord d'appui extérieur annulaire 22 qui s'étend radialement par rapport à l'axe central Z,
- un ressaut annulaire 23 qui s'étend axialement parallèlement à l'axe Z vers la première pièce de tôle 12,
- et ladite deuxième grille 15, qui présente une périphérie extérieure en appui sous la partie annulaire 20 de la première pièce de tôle 12.

Le support antivibratoire 1 comporte en outre une embase 24 réalisée en tôle découpée et emboutie, qui comprend :
- un bord d'appui annulaire 25 qui est fixé à la partie extérieure 5 de la deuxième armature, par exemple par sertissage, et qui est en appui étanche contre ladite couche d'élastomère 19 sous la partie extérieure 5 de la deuxième armature,
- une paroi latérale annulaire axiale 26 qui s'étend à partir de la périphérie intérieure du bord d'appui 25, parallèlement à l'axe Z et en éloignement de la deuxième armature 3,
- un bord d'appui inférieur 27, qui prolonge radialement vers l'intérieur l'extrémité inférieure de la paroi latérale 26,
- et une nervure axiale 28 qui s'étend axialement à l'opposé du corps en élastomère 7 à partir de la portion radialement intérieure du bord d'appui 27.

Le bord d'appui 27 et la nervure 28 de l'embase 24 sont surmoulés par un soufflet souple 29 en élastomère, qui forme également une couche 30 d'élastomère recouvrant le bord d'appui 27 de l'embase et contre laquelle le bord d'appui 22 de la deuxième pièce de tôle 13 vient en appui étanche.

Ainsi, le soufflet 29 définit avec la cloison 11 une deuxième chambre B, dite chambre de compensation, qui est remplie de liquide.

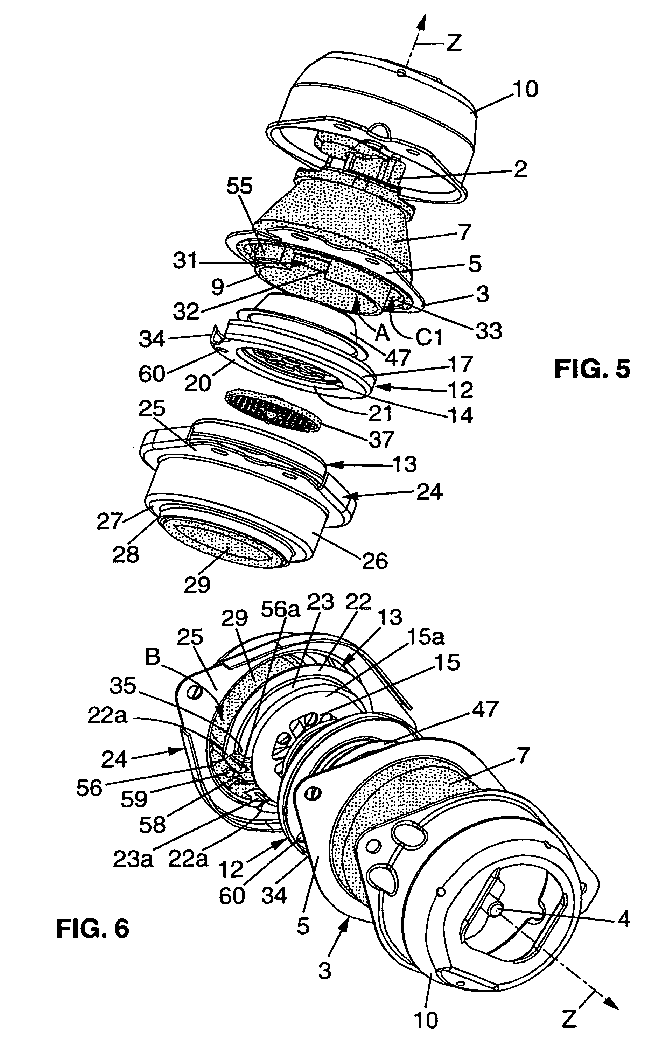

Cette chambre de compensation B communique avec la chambre de travail A par l'intermédiaire d'un passage étranglé C annulaire, qui s'étend sur sensiblement deux tours et sur deux étages autour des chambres A et B, savoir :
- un premier étage C1 qui communique avec la chambre de travail A par l'intermédiaire d'une ouverture 31 obtenue par une découpe 32 de la jupe intérieure 6a de la deuxième armature et par un évidemment correspondant de la base 9 du corps en élastomère, le premier étage C1 du passage étranglé étant délimité entre d'une part, la première pièce de tôle 12 et d'autre part, la gorge annulaire 33 ménagée dans la base 9 du corps en élastomère à l'intérieur de la partie intérieure creuse 6,
- et un deuxième étage C2 qui est délimité par les première et deuxième pièces de tôle 12, 13 et par la paroi latérale 26 de l'embase, ce deuxième étage C2 communiquant avec le premier étage C1 par l'intermédiaire d'une ouverture 34 ménagée dans la première pièce de tôle 12 (voir figure 5), et ledit deuxième étage C2 communiquant en outre avec la chambre de compensation B par l'intermédiaire d'une ouverture 35 ménagée dans la deuxième pièce de tôle 13 (voir figure 6).

Par ailleurs, le support antivibratoire 1 comporte également un clapet de découplage 37, visible sur les figures 1 à 3, qui est monté avec un faible jeu (par exemple, de l'ordre de 0,5 à 1 mm) entre les première et deuxième grilles 14, 15.

Ce clapet de découplage se présente sous la forme d'une plaquette d'élastomère qui est adaptée pour vibrer entre les première et deuxième grilles 14, 15 en s'appliquant alternativement contre ces deux grilles et en les obturant lorsque les première et deuxième armatures 2, 3 subissent des mouvements vibratoires relatifs.

Le clapet de découplage 37 comporte, sur ses première et deuxièmes faces 38, 39, des picots saillants 40 en élastomère qui sont disposés pour prendre appui sur les première et deuxième grilles 14, 15, de façon qu'en l'absence de vibrations relatives entre les première et deuxième armatures 2, 3, le clapet 37 présente un plan moyen P disposé en biais par rapport aux première et deuxième grilles 14, 15.

Lorsque le clapet de découplage est soumis à des vibrations, les picots 40 sont adaptés pour s'écraser sous l'effet de la pression du liquide dans les chambres A, B qui communiquent respectivement avec les première et deuxième faces 38, 39 du clapet de découplage par l'intermédiaire des première et deuxième grilles 14, 15. Ainsi, le rebord périphérique 41 du clapet peut alors venir s'appuyer avec étanchéité contre des parties annulaires pleines 14a, 15a entourant les trous 16 des grilles 14, 15.

De plus, le clapet 37 comporte avantageusement des premier et deuxième tétons de centrage 42, 43 qui coopèrent par engagement mutuel avec les grilles 14, 15 pour centrer le clapet de découplage 37. Dans l'exemple représenté, le premier téton de centrage 42 présente une forme hémisphérique et pénètre dans un trou 14b de la première grille 14, tandis que le deuxième téton de centrage 43 est clipsé dans un trou 15b de la deuxième grille 15, ce deuxième téton de centrage 43 présentant une tête élargie 43a qui pénètre dans la chambre de compensation B.

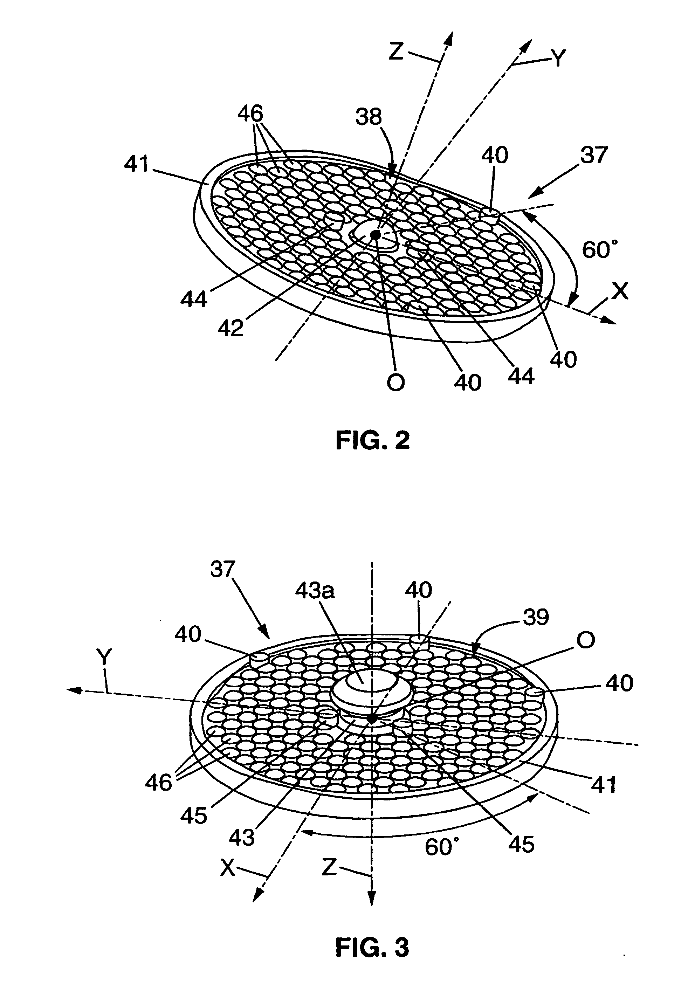

Comme représenté plus en détails sur les figures 2 et 3, les picots 40 qui induisent la position inclinée du clapet de découplage sont de préférence disposés près de la périphérie extérieure du clapet de découplage et seront dits ci-après picots extérieurs.

Les picots extérieurs 40 du clapet de découplage sont de préférence répartis en des premier et deuxième groupes de picots extérieurs 40 : les picots extérieurs 40 du premier groupe sont disposés uniquement sur la première face 38, d'un seul côté d'une ligne imaginaire traversant le clapet de découplage parallèlement au plan moyen P dudit clapet de découplage, tandis que les picots extérieurs 40 du deuxième groupe sont disposés uniquement sur la deuxième face 39 du clapet de découplage, de l'autre côté de ladite ligne imaginaire.

Dans l'exemple considéré, le clapet de découplage 37 présente la forme d'un disque et la ligne imaginaire en question est un axe diamétral Y sensiblement perpendiculaire à l'axe central Z et passant par le centre O du clapet.

Dans l'exemple représenté, le premier groupe de picots extérieurs comprend trois picots extérieurs 40, dont l'un est disposé en alignement avec un axe X passant par le centre O du clapet et perpendiculaire à l'axe Y (les axes X, Y définissent le plan moyen P susmentionné du clapet de découplage), tandis que les deux autres picots extérieurs 40 du premier groupe sont disposés sensiblement à 60° de l'axe X par rapport au centre O du clapet de découplage.

De plus, toujours dans l'exemple représenté, le deuxième groupe de picots extérieurs comprend également trois picots extérieurs 40 qui sont disposés de façon sensiblement symétriques des picots extérieurs 40 du premier groupe, par rapport à l'axe Y : ainsi, les picots extérieurs 40 du deuxième groupe comprennent également un picot extérieur aligné avec l'axe X et deux picots extérieurs disposés sensiblement à 60° de l'axe X par rapport au centre O du clapet de découplage. Les picots extérieurs 40 des premier et deuxième groupes sont disposés au voisinage du rebord extérieur 41 susmentionné du clapet de découplage, lequel rebord extérieur 41 fait saillie vers les grilles 14, 15 à partir des deux faces 38, 39 du clapet de découplage. Les picots extérieurs 40 s'étendent toutefois au delà du rebord extérieur 41 vers les grilles 14, 15.

Grâce à ces dispositions, et notamment grâce à la position inclinée du clapet imposée par les picots extérieurs 40, on réduit notablement les phénomènes de claquements de clapet contre les grilles et on réduit la raideur dynamique du support antivibratoire à fréquences élevées.

Avantageusement, pour contribuer encore à améliorer les performances acoustiques du support antivibratoire, on peut également avoir recours aux dispositions suivantes :
- on peut réaliser sur la première face 38 du clapet de découplage deux picots intérieurs 44 disposés au voisinage du téton de centrage 42 et présentant par exemple la même taille que les picots extérieurs 40, ces picots intérieurs 44 étant par exemple disposés en alignement avec le centre O du clapet selon l'axe X,
- on peut réaliser sur la deuxième face 39 du clapet de découplage, deux picots intérieurs 45 situés au voisinage du téton de centrage 43 et disposés par exemple à l'opposé des picots extérieurs 40 du deuxième groupe par rapport à l'axe Y, les picots intérieurs 45 étant par exemple disposés symétriquement par rapport à l'axe X en formant chacun avec cet axe un angle de l'ordre de 60° par rapport au centre O du clapet,
- et on peut réaliser sur les deux faces 38, 39 du clapet de découplage des bossages arrondis 46 qui font saillie respectivement vers les première et deuxième grilles 14, 15, de préférence en affleurant le rebord 41 et en tous cas sans dépasser les picots 40, 44, 45.

On notera que les faces 38, 39 du clapet 37 pourraient être inversées, sans sortir du cadre de l'invention.

Avantageusement, le support antivibratoire 1 comporte en outre un déflecteur 47 en forme de couronne annulaire centrée sur l'axe Z, qui s'étend à l'intérieur de la chambre de travail A en entourant la première grille 14 et en convergeant vers le sommet 8 du corps en élastomère. L'ouverture 31, par laquelle le passage étranglé C débouche dans la chambre de travail A, se trouve radialement à l'extérieur du déflecteur 47.

Dans l'exemple représenté, le déflecteur 47 comporte un bord d'appui 48 qui s'étend radialement par rapport à l'axe Z et qui est serré axialement entre la base 9 du corps en élastomère et la partie annulaire 20 de la première pièce de tôle 12. Ce bord d'appui 48 se prolonge radialement vers l'intérieur et axialement vers le sommet 8 du corps en élastomère par une paroi latérale 49 qui dans l'exemple représenté présente une forme tronconique, en formant un angle α compris par exemple entre 15 et 35° avec l'axe Z. Cette paroi latérale 49 est elle-même prolongée, à son extrémité supérieure, par un rebord aplati 50 qui s'étend sensiblement radialement vers l'intérieur et qui délimite une ouverture circulaire 51. La largeur du rebord 50 est comprise par exemple entre 2 et 5% du diamètre de l'ouverture 51.

Grâce aux dispositions qui viennent d'être décrites, on améliore très nettement les caractéristiques acoustiques du support antivibratoire 1, et notamment sa raideur dynamique K aux fréquences élevées.

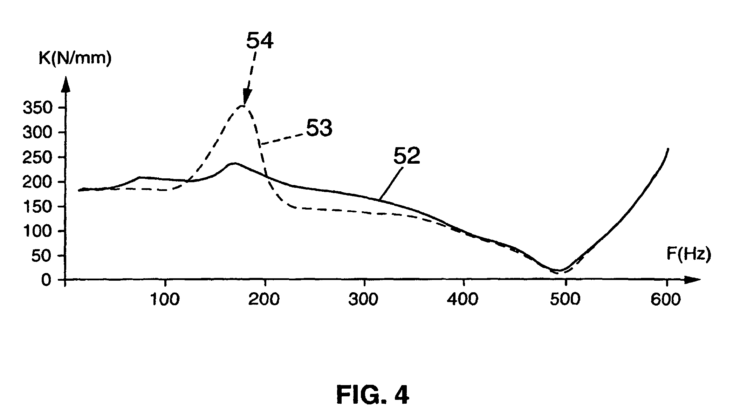

En particulier, on a représenté sur la figure 4, en traits pleins, la courbe 52 de la raideur dynamique K du support antivibratoire selon l'axe Z en fonction de la fréquence F, et on a représenté en pointillés la courbe 53 de la raideur dynamique du même support antivibratoire 1 mais pourvu d'un clapet de découplage classique et dépourvu du déflecteur 47.

On peut voir sur la figure 4 que le support antivibratoire selon l'invention permet d'éviter un pic de raideur 54 caractéristique des supports antivibratoires de l'art antérieur, pic de raideur qui correspondait à la transmission de vibrations acoustiques entre le moteur et la caisse du véhicule.

On notera que le clapet de découplage 37 selon l'invention et le déflecteur 47 selon l'invention produisent chacun un effet bénéfique sur les caractéristiques acoustiques du support antivibratoire, et que, le cas échéant, chacun de ces éléments pourrait être utilisé indépendamment l'un de l'autre.

Autrement dit, le déflecteur 47 peut être utilisé efficacement avec un clapet de découplage autre que le clapet 37 décrit ci-dessus, et le clapet 37 décrit ci-dessus pourrait être utilisé avec bénéfice en l'absence du déflecteur 47.

Toutefois, les inventeurs de la présente invention ont pu constater que la combinaison du clapet de découplage 37 selon l'invention avec le déflecteur 47 selon l'invention produit des effets bénéfiques encore bien supérieurs aux effets qui auraient pu être attendus compte tenu des effets produits par le clapet 37 isolément et des effets produits par le déflecteur 47 isolément.

Par ailleurs, on notera que la réalisation décrite ci-dessus du passage étranglé C est particulièrement économique, dans la mesure où cette réalisation permet d'obtenir un long passage étranglé C, s'étendant sur deux tours, sans avoir recours à une pièce moulée en alliage léger, comme c'est le cas habituellement.

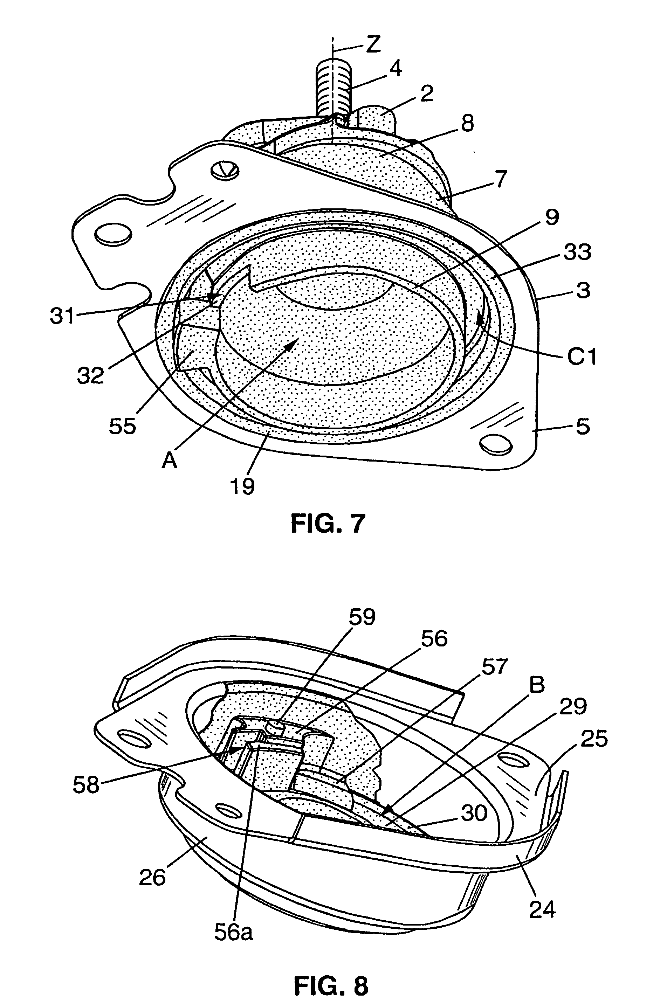

La façon dont est réalisé ce passage étranglé dans l'exemple considéré est représentée plus en détails sur les figures 5 à 8 :
- comme représenté sur les figures 5 et 7, le corps en élastomère 7 forme un bouchon d'élastomère 55 qui obture le premier étage C1 du passage étranglé entre d'une part, l'ouverture 31 qui fait communiquer le passage étranglé avec la chambre de travail A et d'autre part, l'ouverture 34 qui est découpée dans le rebord annulaire 17 et dans la partie annulaire 20 de la pièce de tôle 12 pour faire communiquer entre eux les premier et deuxième étages C1, C2 du passage étranglé,
- et le soufflet en élastomère 29 est moulé d'une seule pièce avec un bouchon d'élastomère 56, bien visible sur les figures 6 et 8, lequel bouchon d'élastomère obture le deuxième étage C2, du passage étranglé entre l'ouverture 34 susmentionnée et l'ouverture 35 qui fait communiquer le deuxième étage C2 du passage étranglé avec la chambre de compensation B, l'ouverture 35 étant découpée dans le bord d'appui 22, dans le ressaut 23 et dans la périphérie extérieure de la partie annulaire pleine 15a de la deuxième pièce de tôle 13.

Ainsi, le liquide qui passe de la chambre de travail A à la chambre de compensation B suit toute la longueur du passage étranglé C, en suivant d'abord le premier étage C1 dans un sens angulaire, puis le deuxième étage C2, de préférence dans le même sens angulaire.

On notera que l'assemblage des première et deuxième pièces de tôle 12, 13 dans le support antivibratoire est facilité, dans l'exemple considéré, grâce aux dispositions suivantes :
- les tranches 22a du bord d'appui 22, qui délimitent partiellement la découpe 35 de la deuxième pièce de tôle 13, viennent s'engager de part et d'autre du bouchon d'élastomère 56 et d'une surépaisseur d'élastomère 57 moulée d'une seule pièce avec ledit bouchon en élastomère 56 (voir figures 6 et 8),
- le bouchon 56 comporte une surface d'appui 56a orientée selon un plan radial et sur lequel vient s'appuyer avec étanchéité une portion de la partie annulaire pleine 15a de la grille 15 au voisinage de l'une 23a des tranches du ressaut 23 de la deuxième pièce de tôle 13, de façon que le bouchon d'élastomère 56 obture une portion de l'ouverture 35 en séparant ainsi ladite ouverture 35 de l'ouverture 34 qui communique avec le premier étage C1 du passage étranglé,
- la tranche 23a du ressaut 23, qui délimite partiellement l'ouverture 35 à l'opposé de la portion non obturée de ladite ouverture, est décalée vers l'intérieur de ladite ouverture 35 par rapport à la tranche correspondante 22a du bord d'appui 22, et cette tranche 23a vient s'engager dans une fente 58 en arc de cercle, centrée autour de l'axe Z, ladite fente 58 étant ménagée dans le bouchon d'élastomère 56, à l'opposé de la partie de l'ouverture 35 laissée libre par le bouchon 56,
- le bouchon d'élastomère 56 comporte avantageusement un pion de centrage 59 orienté axialement vers la première pièce de tôle 12 et s'engageant dans un trou correspondant 60 de ladite première pièce de tôle, de façon à positionner angulairement ladite première pièce de tôle,
- le bord d'appui 25 de l'embase et la partie extérieure 5 de la deuxième armature présentent une forme non symétrique de révolution, de façon à déterminer la position angulaire relative de ces deux pièces l'une par rapport à l'autre lors du montage.

## Revendications

1. Support antivibratoire hydraulique destiné à relier entre eux des premier et deuxième éléments rigides pour amortir et filtrer des vibrations entre ces éléments, ce support comportant :
- des première et deuxième armatures rigides (2, 3) destinées à être fixées respectivement aux premier et deuxième éléments rigides à réunir,
- un corps en élastomère (7) reliant entre elles les première et deuxième armatures (2, 3),
- une première chambre (A) remplie de liquide, au moins partiellement délimitée par le corps en élastomère (7),
- et un dispositif de découplage (14, 15, 37) comprenant d'une part, des première et deuxième grilles (14, 15) parallèles de forme générale plane, et d'autre part, un clapet de découplage (37) qui se présente sous la forme d'une plaquette d'élastomère et qui comprend des première et deuxième faces (38, 39) dotées de picots saillants (40, 44, 45) en élastomère, le clapet de découplage étant monté avec jeu entre les première et deuxième grilles avec les première et deuxième faces (38, 39) dudit clapet de découplage disposées en regard respectivement des première et deuxième grilles (14, 15) et ledit clapet de découplage étant adapté pour obturer lesdites grilles, la première grille (14) communiquant avec la première chambre (A) et la deuxième grille (15) communiquant avec une deuxième chambre (B) adaptée pour permettre au clapet de découplage (37) de vibrer librement entre les deux grilles lorsque les première et deuxième armatures (2, 3) subissent des mouvements vibratoires relatifs,
**caractérisé en ce que** les picots (40, 44, 45) du clapet de découplage sont disposés pour qu'en l'absence de vibrations relatives entre les première et deuxième armatures (2, 3), le clapet de découplage (37) soit maintenu dans une position de repos où ledit clapet présente un plan moyen (P) disposé en biais par rapport aux première et deuxième grilles (14, 15).

2. Support antivibratoire selon la revendication 1, dans lequel les picots du clapet de découplage (37) comprennent des picots extérieurs (40) qui sont disposés au voisinage d'une périphérie extérieure dudit clapet de découplage et qui sont répartis en des premier et deuxième groupes de picots extérieurs disposés de part et d'autre d'une ligne droite imaginaire (Y) traversant le clapet de découplage parallèlement au plan moyen (P) dudit clapet de découplage, le premier groupe de picots extérieurs (40) étant situé sur la première face (38) et le deuxième groupe de picots extérieurs (40) étant situé sur la deuxième face (39) dudit clapet de découplage.

3. Support antivibratoire selon la revendication 2, dans lequel le clapet de découplage (37) présente une forme de disque circulaire ayant un centre (O) par lequel passe une ligne diamétrale (Y) constituant ladite ligne imaginaire.

4. Support antivibratoire selon la revendication 2 ou la revendication 3, dans lequel les picots extérieurs (40) du premier groupe sont symétriques des picots extérieurs (40) du deuxième groupe par rapport à ladite ligne imaginaire (Y).

5. Support antivibratoire selon l'une quelconque des revendications 2 à 4, dans lequel le clapet de découplage (37) comporte des premier et deuxième tétons de centrage (42, 43) en élastomère disposés au centre du clapet de découplage respectivement sur les deux faces (38, 39) dudit clapet de découplage, ces premier et deuxième tétons de centrage coopérant respectivement avec les deux grilles (14, 15) pour centrer le clapet de découplage par rapport auxdites grilles, les picots du clapet de découplage comprenant en outre des picots intérieurs (44, 45) disposés au voisinage du centre (O) dudit clapet de découplage sur les deux faces (38, 39) dudit clapet de découplage.

6. Support antivibratoire selon la revendication 5, dans lequel le clapet de découplage (37) comporte deux picots intérieurs (44) disposés au voisinage du premier téton de centrage (42), de façon symétrique par rapport à ladite ligne imaginaire.

7. Support antivibratoire selon la revendication 5 ou la revendication 6, dans lequel le deuxième téton de centrage (43) est clipsé dans l'une des grilles (14, 15) et le clapet de découplage (37) comporte deux picots intérieurs (45) disposés près du deuxième téton de centrage, à l'opposé des picots extérieurs (40) du deuxième groupe par rapport à ladite ligne imaginaire (Y).

8. Support antivibratoire selon l'une quelconque des revendications précédentes, dans lequel le clapet de découplage (37) comporte en outre des bossages arrondis (46) en élastomère qui sont répartis sur l'ensemble des première et deuxième faces (38, 39) dudit clapet de découplage et qui font saillie respectivement vers les première et deuxième grilles (14, 15), les picots (40, 44, 45) s'étendant au-delà desdits bossages arrondis à partir des première et deuxième faces du clapet de découplage.

9. Support antivibratoire selon la revendication 8, dans lequel le clapet de découplage (37) comporte en outre un rebord périphérique extérieur (41) faisant saillie vers les première et deuxième grilles (14, 15) à partir des première et deuxième faces (38, 39) du clapet de découplage, ce rebord périphérique (41) affleurant les bossages arrondis (46) desdites première et deuxième faces.

10. Support antivibratoire selon l'une quelconque des revendications précédentes, dans lequel la deuxième chambre (B) est remplie de liquide et est délimitée au moins partiellement par une paroi souple en élastomère (29), un passage étranglé (C) faisant communiquer les première et deuxième chambres (A, B).

11. Support antivibratoire selon la revendication 10, dans lequel le corps en élastomère (7) présente une forme de cloche s'étendant en divergeant selon un axe central (Z) entre un sommet (8) solidaire de la première armature (2) et une base annulaire (9) solidaire de la deuxième armature (3), et le support antivibratoire comporte en outre un déflecteur (47) en forme de couronne annulaire qui s'étend à l'intérieur de la première chambre (A) en entourant la première grille (14) et en convergeant vers le sommet (8) du corps en élastomère, ledit passage étranglé (C) débouchant dans la première chambre (A) à l'extérieur du déflecteur (47).

12. Support antivibratoire selon la revendication 11, dans lequel les première et deuxième grilles (14, 15) appartiennent à une cloison rigide (15) qui sépare les première et deuxième chambres (A, B), le déflecteur comportant un bord d'appui (48) qui s'étend parallèlement à ladite cloison rigide (11) et qui est serré entre la base (9) du corps en élastomère et ladite cloison rigide.

13. Support antivibratoire selon la revendication 11 ou la revendication 12, dans lequel le déflecteur (47) converge vers un sommet aplati s'étendant sensiblement parallèlement aux première et deuxième grilles, ce sommet aplati présentant un rebord annulaire (50) qui s'étend sur une certaine largeur et qui entoure une ouverture (51) présentant elle-même un certain diamètre, la largeur du rebord étant comprise entre 2% et 5% du diamètre de l'ouverture.

## Patentansprüche

1. Hydraulisches schwingungsdämpfendes Lager, um ein erstes und ein zweites starres Element miteinander zu verbinden und um Schwingungen zwischen diesen Elementen zu dämpfen und zu filtern, wobei dieses Lager Folgendes enthält:
- eine erste und eine zweite starre Armatur (2, 3) zum Befestigen jeweils an das erste und an das zweite starre Element, welche miteinander zu verbinden sind,
- einen Elastomerkörper (7), welcher die erste und die zweite Armatur (2, 3) miteinander verbindet,
- eine erste, mit Flüssigkeit gefüllte Kammer (A), welche zumindest teilweise von dem Elastomerkörper (7) begrenzt ist und
- eine Entkopplungsvorrichtung (14, 15, 37) mit einem ersten und einem zweiten Gitter (14, 15), welche parallel und insgesamt flächig gestaltet sind, einerseits, und einer Entkopplungsklappe (37) andererseits, welche sich in Form eines Elastomerplättchens darstellt und eine erste und eine zweite Seite (38, 39) aufweist, welche mit vorspringenden Elastomernoppen (40, 44, 45) versehen sind, wobei die Entkopplungsklappe mit Spiel zwischen dem ersten und dem zweiten Gitter derart montiert ist, dass die erste und die zweite Fläche (38, 39) der genannten Entkopplungsklappe gegenüber dem ersten beziehungsweise dem zweiten Gitter (14, 15) angeordnet sind, und die genannte Entkopplungsklappe angepasst ist, um die genannten Gitter zu verschließen, wobei das erste Gitter (14) mit der ersten Kammer (A) kommuniziert und das zweite Gitter (15) mit einer zweiten Kammer (B) kommuniziert, welche angepasst ist, um das freie Schwingen der Entkopplungsklappe (37) zwischen den zwei Gittern zu ermöglichen, wenn die erste und die zweite Armatur (2, 3) relative Schwingungsbewegungen erfahren, **dadurch gekennzeichnet, dass** die Noppen (40, 44, 45) der Entkopplungsklappe angeordnet sind, damit bei fehlenden relativen Schwingungen zwischen der ersten und der zweiten Armatur (2, 3) die Entkopplungsklappe (37) in einer Ruhestellung gehalten wird, in welcher die genannte Klappe eine mittlere Ebene (P) aufweist, welche schräg zu dem ersten und zu dem zweiten Gitter (14, 15) angeordnet ist.

2. Schwingungsdämpfendes Lager nach Anspruch 1, bei dem die Noppen der Entkopplungsklappe (37) äußere Noppen (40) umfassen, welche in der Nähe eines äußeren Umfangs der genannten Entkopplungsklappe angeordnet sind und in eine erste und eine zweite Gruppe von äußeren Noppen aufgeteilt sind, welche beidseitig einer imaginären Geraden (Y) angeordnet sind, welche die Entkopplungsklappe parallel zur mittleren Ebene (P) der genannten Entkopplungsklappe durchquert, wobei die erste Gruppe von äußeren Noppen (40) auf der ersten Seite (38) und die zweite Gruppe von äußeren Noppen (40) auf der zweiten Seite (39) der genannten Entkopplungsklappe angeordnet sind.

3. Schwingungsdämpfendes Lager nach Anspruch 2, bei dem die Entkopplungsklappe (37) die Form einer kreisförmigen Scheibe aufweist, welche ein Zentrum (O) aufweist, welches von einer Durchmesserlinie (Y) durchquert wird, welche die genannte imaginäre Linie bildet.

4. Schwingungsdämpfendes Lager nach Anspruch 2 oder nach Anspruch 3, bei dem die äußeren Noppen (40) der ersten Gruppe symmetrisch zu den äußeren Noppen (40) der zweiten Gruppe in Bezug auf die genannte imaginäre Linie (Y) sind.

5. Schwingungsdämpfendes Lager nach einem der Ansprüche 2 bis 4, bei dem die Entkopplungsklappe (37) einen ersten und einen zweiten Elastomer-Zentrierzapfen (42, 43) aufweist, welche im Zentrum der Entkopplungsklappe jeweils auf den zwei Seiten (38, 39) der genannten Entkopplungsklappe angeordnet sind, wobei dieser erste und dieser zweite Zentrierzapfen jeweils mit den zwei Gittern (14, 15) zusammenwirken, um die Entkopplungsklappe in Bezug auf die genannten Gitter zu zentrieren, wobei die Noppen der Entkopplungsklappe ferner innere Noppen (44, 45) umfassen, welche in der Nähe des Zentrums (O) der genannten Entkopplungsklappe auf den beiden Seiten (38, 39) der genannten Entkopplungsklappe angeordnet sind.

6. Schwingungsdämpfendes Lager nach Anspruch 5, bei dem die Entkopplungsklappe (37) zwei innere Noppen (44) aufweist, welche in der Nähe des ersten Zentrierzapfens (42) symmetrisch in Bezug auf die genannte imaginäre Linie angeordnet sind.

7. Schwingungsdämpfendes Lager nach Anspruch 5 oder nach Anspruch 6, bei dem der zweite Zentrierzapfen (43) in eines der Gitter (14, 15) eingeclipst ist und die Entkopplungsklappe (37) zwei innere Noppen (45) aufweist, welche in der Nähe des zweiten Zentrierzapfens gegenüber den äußeren Noppen (40) der zweiten Gruppe in Bezug auf die genannte imaginäre Linie (Y) angeordnet sind.

8. Schwingungsdämpfendes Lager nach einem der vorhergehenden Ansprüche, bei dem die Entkopplungsklappe (37) ferner abgerundete Elastomervorsprünge (46) aufweist, welche auf der Gesamtheit aus der ersten und zweiten Seite (38, 39) der genannten Entkopplungsklappe verteilt sind und jeweils zu dem ersten und zu dem zweiten Gitter (14, 15) hin ragen, wobei die Noppen (40, 44, 45) sich von der ersten und von der zweiten Seite der Entkopplungsklappe ausgehend über die genannten abgerundeten Vorsprünge hinaus erstrecken.

9. Schwingungsdämpfendes Lager nach Anspruch 8, bei dem die Entkopplungsklappe (37) ferner eine äußere Umfangseinfassung (41) aufweist, welche von der ersten und von der zweiten Seite (38, 39) der Entkopplungsklappe ausgehend zu dem ersten und zu dem zweiten Gitter (14, 15) hin ragt, wobei diese Umfangseinfassung (41) mit den abgerundeten Vorsprüngen (46) der genannten ersten und zweiten Seite fluchtet.

10. Schwingungsdämpfendes Lager nach einem der vorhergehenden Ansprüche, bei dem die zweite Kammer (B) mit Flüssigkeit gefüllt ist und zumindest teilweise von einer flexiblen Elastomerwand (29) begrenzt ist, wobei die erste und die zweite Kammer (A, B) über einen verengten Durchgang (C) kommunizieren.

11. Schwingungsdämpfendes Lager nach Anspruch 10, bei dem der Elastomerkörper (7) die Form einer Glocke aufweist, welche sich nach einer zentralen Achse (Z) auseinandergehend zwischen einem Gipfel (8), welcher mit der ersten Armatur (2) fest verbunden ist, und einer ringförmigen Basis (9), welche mit der zweiten Armatur (3) fest verbunden ist, erstreckt, und das Schwingungsdämpfendes Lager ferner einen Ablenker (47) in Form eines ringförmigen Kranzes aufweist, welcher sich innerhalb der ersten Kammer (A) erstreckt und dabei das erste Gitter (14) umgibt und zum Gipfel (8) des Elastomerkörpers hin zusammenläuft, wobei der genannte verengte Durchgang (C) in die erste Kammer A außerhalb des Ablenkers (47) mündet.

12. Schwingungsdämpfendes Lager nach Anspruch 11, bei dem das erste und das zweite Gitter (14, 15) zu einer starren Trennwand (15) gehören, welche die erste und die zweite Kammer (A, B) trennt, wobei der Ablenker einen Stützrand (48) aufweist, welcher sich parallel zu der genannten starren Trennwand (11) erstreckt und zwischen der Basis (9) des Elastomerkörpers und der genannten starren Trennwand eingeklemmt ist.

13. Schwingungsdämpfendes Lager nach Anspruch 11 oder nach Anspruch 12, bei dem der Ablenker (47) zu einem abgeflachten Gipfel hin zusammenläuft, welcher sich weitestgehend parallel zu dem ersten und zu dem zweiten Gitter erstreckt, wobei dieser abgeflachter Gipfel eine ringförmige Einfassung (50) aufweist, welche sich auf eine gewisse Breite erstreckt und eine Öffnung (51) umgibt, welche selbst einen gewissen Durchmesser aufweist, wobei die Breite der Einfassung zwischen 2 % und 5 % des Öffnungsdurchmessers liegt.

## Claims

1. A hydraulic vibration-damping support serving to interconnect first and second rigid elements so as to damp and filter vibration between said elements, the support comprising:
first and second rigid strength members (2, 3) serving to be fixed to respective ones of the first and second rigid elements to be interconnected;
an elastomer body (7) interconnecting the first and second strength members (2, 3);
a first chamber (A) filled with liquid, and defined at least in part by the elastomer body (7); and
a decoupling device (14, 15, 37) comprising firstly first and second parallel gratings (14, 15) that are generally plane in shape, and secondly a decoupling valve member (37) which is in the form of an elastomer pad and which has first and second faces (38, 39) provided with projecting studs (40, 44, 45) made of elastomer, the decoupling valve member being mounted with clearance between the first and second gratings with the first and second faces (38, 39) of said decoupling valve member disposed facing respective ones of the first and second gratings (14, 15), and said decoupling valve member being suitable for closing off said gratings, said first grating (14) communicating with the first chamber (A) and the second grating (15) communicating with a second chamber (B) suitable for enabling the decoupling valve member (37) to vibrate freely between the two gratings when the first and second strength members (2, 3) are subjected to relative vibratory movements;
said vibration-damping support being **characterized in that** the studs (40, 44, 45) of the decoupling valve member are disposed so that, in the absence of relative vibration between the first and second strength members (2, 3), the decoupling valve member (37) is held in a rest position in which said valve member has a midplane (P) disposed on a slant relative to the first and second gratings (14, 15).

2. A vibration-damping support according to claim 1, in which the studs of the decoupling valve member (37) comprise outer studs (40) which are disposed in the vicinity of an outer periphery of said decoupling valve member and which are distributed in first and second groups of outer studs disposed on either side of a geometrical construction line (Y) extending across the decoupling valve member parallel to the midplane (P) of said decoupling valve member, the first group of outer studs (40) being situated on the first face (38), and the second group of outer studs (40) being situated on the second face (39) of said decoupling valve member.

3. A vibration-damping support according to claim 2, in which the decoupling valve member (37) is in the shape of a circular disk having a center (O) through which a diametrical line (Y) constituting said construction line passes.

4. A vibration-damping support according to claim 2 or claim 3, in which the outer studs (40) of the first group are symmetrical to the outer studs (40) of the second group about said construction line (Y).

5. A vibration-damping support according to any one of claims 2 to 4, in which the decoupling valve member (37) is provided with first and second elastomer centering lugs (42, 43) disposed at the center of the decoupling valve member on respective ones of the two faces (38, 39) of said decoupling valve member, said first and second centering lugs co-operating with respective ones of the two gratings (14, 15) to center the decoupling valve member relative to said gratings, the studs of the decoupling valve member further comprising inner studs (44, 45) disposed in the vicinity of the center (O) of said decoupling valve member on both faces (38, 39) of said decoupling valve member.

6. A vibration-damping support according to claim 5, in which the decoupling valve member (37) is provided with two inner studs (44) disposed in the vicinity of the first centering lug (42), symmetrically about said construction line.

7. A vibration-damping support according to claim 5 or claim 6, in which the second centering lug (43) is clipped into one of the gratings (14, 15), and the decoupling valve member (37) is provided with two inner studs (45) disposed close to the second centering lug, on the side of said construction line (Y) opposite to its side on which the outer studs (40) of the second group are situated.

8. A vibration-damping support according to any preceding claim, in which the decoupling valve member (37) is further provided with rounded elastomer projections (46) which are distributed over the entire first and second faces (38, 39) of said decoupling valve member, and which project towards respective ones of the first and second gratings (14, 15), the studs (40, 44, 45) extending beyond said round projections from the first and second faces of the decoupling valve member.

9. A vibration-damping support according to claim 8, in which the decoupling valve member (37) is further provided with an outer peripheral rim (41) projecting towards the first and second gratings (14, 15) from the first and second faces (38, 39) of the decoupling valve member, said peripheral rim (41) being flush with the rounded projections (46) of said first and second faces.

10. A vibration-damping support according to any preceding claim, in which the second chamber (B) is filled with liquid and is defined at least in part by a flexible elastomer wall (29), a constricted passage (C) putting the first and second chambers (A, B) into communication with each other.

11. A vibration-damping support according to claim 10, in which the elastomer body (7) is bell-shaped so that it diverges about a central axis (Z) between a top (8) secured to the first strength member (2) and an annular base (9) secured to the second strength member (3), and the vibration-damping support further comprises a deflector (47) in the form of an annular ring that extends inside the first chamber (A) by surrounding the first grating (14) and by converging towards the top (8) of the elastomer body, said constricted passage (C) opening out in the first chamber (A) outside the deflector (47).

12. A vibration-damping support according to claim 11, in which the first and second gratings (14, 15) are part of a rigid partition (15) which separates the first and second chambers (A, B), the deflector including an abutment margin (48) which extends parallel to said rigid partition (11) and which is clamped between the base (9) of the elastomer body and said rigid partition.

13. A vibration-damping support according to claim 11 or claim 12, in which the deflector (47) converges towards a flat top extending substantially parallel to the first and second gratings, the flat top having an annular rim (50) which extends over a certain width and which surrounds an opening (51) itself having a certain diameter, the width of the rim lying in the range 2% of the diameter of the opening to 5% of the diameter of the opening.
